(19)

Europäisches
Patentamt
European
Patent Office
Office européen
des brevets

(11)     **EP 4 492 876 A1**

(12)                          **EUROPEAN PATENT APPLICATION**
                              published in accordance with Art. 153(4) EPC

(43) Date of publication:
**15.01.2025  Bulletin 2025/03**

(21) Application number: **23831823.2**

(22) Date of filing: **23.06.2023**

(51) International Patent Classification (IPC):
*H04W 52/02* (2009.01)    *H04W 76/27* (2018.01)

(52) Cooperative Patent Classification (CPC):
**H04W 52/02; H04W 76/27;** Y02D 30/70

(86) International application number:
**PCT/KR2023/008756**

(87) International publication number:
**WO 2024/005463 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.06.2022  KR 20220079033**

(71) Applicant: **Samsung Electronics Co., Ltd
Suwon-si, Gyeonggi-do 16677 (KR)**

(72) Inventors:
• **LEE, Jaewon
  Suwon-si Gyeonggi-do 16677 (KR)**
• **CHOI, Seunghoon
  Suwon-si Gyeonggi-do 16677 (KR)**
• **RYU, Hyunseok
  Suwon-si Gyeonggi-do 16677 (KR)**
• **YANG, Hyewon
  Suwon-si Gyeonggi-do 16677 (KR)**
• **YI, Junyung
  Suwon-si Gyeonggi-do 16677 (KR)**

(74) Representative: **Nederlandsch Octrooibureau
P.O. Box 29720
2502 LS The Hague (NL)**

(54)     **METHOD AND DEVICE FOR REDUCING POWER CONSUMPTION OF TERMINAL HAVING
         WAKEUP RECEIVER IN WIRELESS COMMUNICATION SYSTEM**

(57)     The present disclosure relates to a 5G or 6G
communication system for supporting a higher data
transfer rate. In addition, the present disclosure provides
a method for reducing power consumption of a terminal
having a wakeup receiver in a mobile communication
system.

**EP 4 492 876 A1**

FIG.15

## Description

[Technical Field]

The disclosure relates to a wireless communication system and, more particularly, to a method and a device for reducing power consumed by a UE having a wakeup receiver.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to reduce power consumption of terminals.

[Disclosure of Invention]

[Technical Problem]

Based on the above discussion, the disclosure provides a method and a device for reducing power consumed by a UE having a wakeup receiver in a wireless communication system.

[Solution to Problem]

According to an embodiment of the disclosure, a method performed by a terminal of a wireless communication system may include: receiving a wakeup-related signal from a base station through a wakeup receiver configured to receive only the wakeup-related signal; determining a state of a main radio configured to transmit/receive data, based on the wakeup-related signal; and determining a state of the wakeup receiver, based on the state of the main radio.

The wakeup receiver and the main radio may be independently configured.

In the determining of a state of a main radio configured to transmit/receive data, based on the wakeup-related signal, in case that the wakeup-related signal is a signal indicating main radio ON, the state of the main radio may be controlled to be ON, or the state of the terminal may be changed to an RRC connected state.

In the changing of the state of the terminal to an RRC connected state, control may be conducted such that a random access is performed immediately after receiving the wakeup-related signal through the main radio, or after a predetermined time.

In the determining of a state of a main radio configured to transmit/receive data, based on the wakeup-related signal, in case that the wakeup-related signal is a signal indicating main radio OFF, the state of the main radio may be controlled to be OFF, or the state of the terminal may be changed to an RRC inactive state or RRC idle state.

In case that the determined state of the main radio is OFF, the state of the terminal may be an RRC inactive state or RRC idle state, and in case that the determined state of the main radio is ON, the state of the terminal may be an RRC connected state.

In the determining of a state of the wakeup receiver, based on the state of the main radio, in case that the determined state of the main radio is OFF, the state of the wakeup receiver may be controlled to be ON, and in case that the determined state of the main radio is ON, the state of the wakeup receiver may be controlled to be OFF.

The method may further include controlling the state of the main radio to be OFF after transmission/reception of the data is completed.

The method may further include receiving configuration information regarding operations of the wakeup receiver from the base station, and the configuration information may include at least one of information regarding a state change period of the wakeup receiver, information regarding state mapping between the wakeup receiver and the main radio, and information regarding a wakeup-related signal providing period of the base station.

According to an embodiment of the disclosure, a terminal of a wireless communication system may include: a wakeup receiver; a main radio; and at least one processor, and the at least one processor may be configured to: receive a wakeup-related signal from a base station through a wakeup receiver configured to receive only the wakeup-related signal; determine a state of a main radio configured to transmit/receive data, based on the wakeup-related signal; and determine a state of the wakeup receiver, based on the state of the main radio.

The wakeup receiver and the main radio may be independently configured.

The at least one processor may be configured to, in case that the wakeup-related signal is a signal indicating main radio ON, control the state of the main radio so as to be ON, or change the state of the terminal to an RRC connected state.

The at least one processor may be configured to, in case that the wakeup-related signal is a signal indicating main radio ON, control the state of the main radio so as to be ON, or change the state of the terminal to an RRC connected state.

The at least one processor may be configured to, in case that the wakeup-related signal is a signal indicating main radio OFF, control the state of the main radio so as to be OFF, or change the state of the terminal to an RRC inactive state or RRC idle state.

In case that the determined state of the main radio is OFF, the state of the terminal may be an RRC inactive state or RRC idle state, and in case that the determined state of the main radio is ON, the state of the terminal may be an RRC connected state.

The at least one processor may be configured to, in case that the determined state of the main radio is OFF, control the state of the wakeup receiver so as to be ON, and in case that the determined state of the main radio is ON, control the state of the wakeup receiver so as to be OFF.

The at least one processor may be configured to receive configuration information regarding operations of the wakeup receiver from the base station, and the configuration information may include at least one of information regarding a state change period of the wakeup receiver, information regarding state mapping between the wakeup receiver and the main radio, and information regarding a wakeup-related signal providing period of the base station.

[Advantageous Effects of Invention]

The disclosure provides a method and a device capable of effectively providing a service in a wireless communication system.

[Brief Description of Drawings]

FIG. 1 illustrates a basic structure of a time-frequency resource domain in a 5G system according to an embodiment of the disclosure.

FIG. 2 illustrates a beam sweeping operation and a time domain mapping structure of a synchronization signal according to an embodiment of the disclosure.

FIG. 3 illustrates an example of a random access procedure according to an embodiment of the disclosure.

FIG. 4 illustrates an example of a procedure in which a UE reports UE capability information to a gNB according to an embodiment of the disclosure.

FIG. 5 illustrates a gNB according to an embodiment of the disclosure indicating a main radio state transition of a UE having a WUR through a WUS.

FIG. 6 illustrates the WUR of a UE according to an embodiment of the disclosure in a single state.

FIG. 7 illustrates a state transition when the WUR of a UE according to an embodiment of the disclosure is in a dual state.

FIG. 8 illustrates a state transition when the WUR of a UE according to an embodiment of the disclosure is in a multi-state.

FIG. 9 illustrates the state of a UE main radio, which remains an existing RRC state, as states of a WUR are determined due to a low-latency/low-power technique that uses a WUS according to an embodiment of the disclosure.

FIG. 10 illustrates definition of an additional OFF state while maintaining the state of a UE main radio to be an existing RRC state, as states of a WUR are determined due to a low-latency/low-power technique that uses a WUS according to an embodiment of the disclosure.

FIG. 11 illustrates redefinition of a UE main radio state to a single state as states of a WUR are determined due to a low-latency/low-power techniques that use a WUS according to an embodiment of the disclosure.

FIG. 12 illustrates redefinition of a UE main radio state to a dual state as states of a WUR are determined due to a low-latency/low-power techniques that use a WUS according to an embodiment of the disclosure.

FIG. 13 illustrates redefinition of a UE main radio state to a multi-state as states of a WUR are determined due to a low-latency/low-power techniques that use a WUS according to an embodiment of the disclosure.

FIG. 14 illustrates the relation between two states when a WUR and a main radio according to an embodiment of the disclosure both have a dual state of ON/OFF.

FIG. 15 illustrates the relation between two states when a WUR according to an embodiment of the disclosure has a dual state of ON/OFF, and a main radio maintains an existing RRC state.

FIG. 16 illustrates a UE's generalized procedure in a state transition process for the UE's main radio operation according to an embodiment of the disclosure.

FIG. 17 illustrates a UE's generalized procedure in a state transition process for the UE's main radio operation suspension according to an embodiment of the disclosure.

FIG. 18 illustrates a structure of a UE according to an embodiment of the disclosure.

FIG. 19 illustrates a structure of a base station according to an embodiment of the disclosure.

[Mode for the Invention]

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description, terms and names defined in the 3GPP new radio standards (3GPP NR: 5th generation mobile communication standards) are used for the sake of descriptive convenience. However, the disclosure is not limited by these terms and names, and may be applied in the same way to systems that conform other standards. In addition, the term "terminal" may refer to not only cellular phones, smartphones, IoT devices, and sensors, but also other wireless communication devices.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In order to process mobile data traffic which has recently increased exponentially, initial standards of new radio (NR) access technology or 5th generation (5G) systems which are next-generation communication systems after long term evolution (LTE) (or evolved universal terrestrial radio access (E-UTRA)) and LTE-advanced (LTE-A) (or E-UTRA evolution) have been completed. While legacy mobile communication systems have focused on conventional voice/data communication, 5G systems aim to satisfy various services and requirements, such as an enhanced mobile broadband (eMBB) service for improving legacy voice/data communication, an ultra-reliable and low latency communication (URLLC) service, and a massive machine type communication (MTC) service supporting massive machine-to-machine communication.

The system transmission bandwidth per single carrier of legacy LTE and LTE-A is limited to a maximum of 20MHz, but 5G systems aim to provide super-fast data services up to multiple Gbps by using super-broad bandwidths far wider than the same. Accordingly, 5G systems consider super-high-frequency bands ranging from multiple GHz to a maximum of 100 GHz, in which it is relatively easy to secure super-broad-bandwidth frequencies, as candidate frequencies. Additionally, it is possible to secure broad-bandwidth frequencies for 5G systems through frequency rearrangement or allocation among frequency bands ranging from hundreds of MHz to multiple GHz used in legacy mobile communication systems.

Radio waves in super-high frequency bands have millimeter-level wavelengths and thus are also referred to as millimeter waves (mmWave). However, the pathloss of radio waves in super-high frequency bands increases in proportion to the frequency band, thereby reducing the coverage of the mobile communication systems.

In order to overcome the shortcoming of coverage reduction in super-high frequency bands, a beamforming technology is applied such that the distance reached by radio waves is increased by concentrating the energy radiated by the radio waves at a specific target point by using multiple antennas. That is, signals to which the beamforming technology is applied have a smaller beam width, and radiated energy is concentrated within the smaller beam width, thereby increasing the distance reached by radio waves. The beamforming technology may be applied to each of the transmission and reception ends. In addition to the increased coverage, the beamforming technology is also advantageous in that interference is reduced in regions in directions other than the beamforming direction. Appropriate operations of the beamforming technology require a method for accurately measuring transmitted/received beams and sending feedback. The beamforming technology may be applied to a control channel or a data channel having one-to-one correspondence between a UE and a gNB. In addition, the beamforming technology may also be applied to a control channel and a data channel for transmitting a common signal transmitted from a gNB to multiple UEs in the system, such as a synchronization signal, a physical broadcast channel (PBCH), and system information, in order to increase the coverage. When the beamforming technology is applied to a common signal, a beam sweeping technology is additionally applied such that the signal is transmitted after changing the beam direction, thereby ensuring that the common signal can reach a UE existing at a specific location inside the cell.

As another requirement of 5G systems, an ultra-low latency service is required such that the transmission delay between the transmission and reception ends is about 1ms or less. In an attempt to reduce the transmission delay, there is a need for frame structure design based on a shorter transmission time interval (TTI) than LTE and LTE-A. The TTI is the basic time unit for performing scheduling, and legacy LTE and LTE-A have a TTI of 1ms, which corresponds to the length of one subframe. For example, the short TTI, on which 5G systems are based in order to meet the requirement regarding the ultra-low latency service, may be 0.5ms, 0.25ms, 0.125ms, or the like, which is shorter than legacy LTE and LTE-A.

According to an embodiment of the disclosure, a method for signal transmission by a UE having a wakeup receiver in a mobile communication system may be defined, thereby solving the problem of excessive power consumption by the UE and accomplishing a high level of energy efficiency.

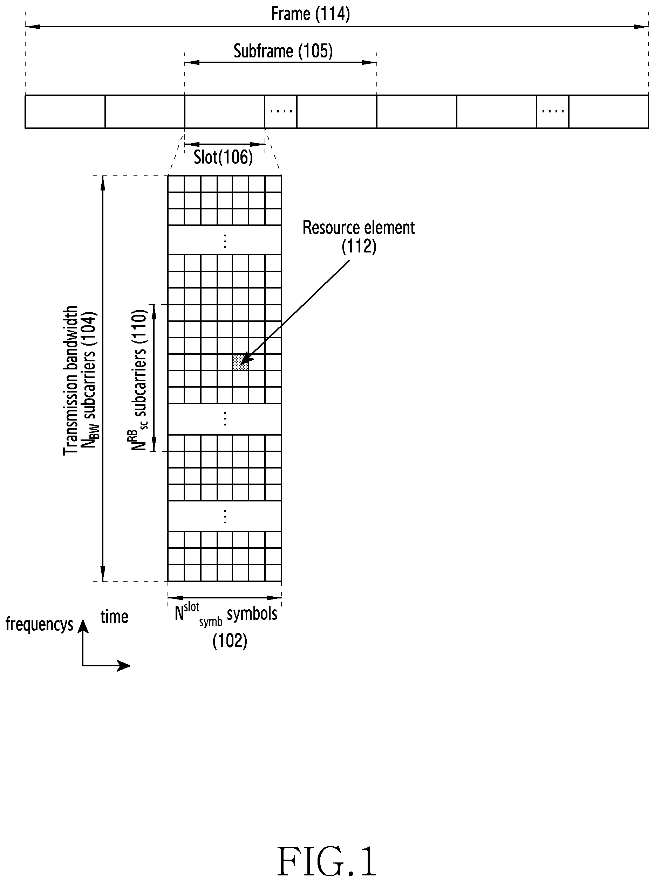

FIG. 1 illustrates the basic structure of a time-frequency resource domain of a 5G system according to an embodiment of the disclosure. That is, FIG. 1 illustrates the basic structure of a time-frequency resource domain which is a radio resource domain used to transmit data or control channels in a 5G system.

Referring to FIG. 1, the horizontal axis denotes the time domain, and the vertical axis denotes the frequency domain. The minimum transmission unit in the time domain of the 5G system is an orthogonal frequency division multiplexing (OFDM) symbol, a group of $N_{symb}^{slot}$ symbols 102 may constitute one slot 106, and a group of $N_{slot}^{subframe}$ slots may constitute one subframe 105. The length of one subframe 105 may be 1.0ms, and a group of ten subframes may constitute a 10ms frame 114. The minimum transmission unit in the frequency domain is a subcarrier, and a total of $N_{BW}$ subcarriers 104 may constitute the entire system transmission bandwidth.

The basic unit of a resource in the time-frequency domain is a resource element (RE) 112, which may be described by an OFDM symbol index and a subcarrier index. A resource block (RB) or a physical resource block (PRB) may be defined by $N_{sc}^{RB}$ consecutive subcarriers 110 in the frequency domain. In the 5G system, $N_{sc}^{RB}=12$, and the data rate may increase in proportion to the number of RBs scheduled for a UE.

In 5G systems, a gNB may map data at the RB level, and may generally schedule RBs constituting one slot with regard to a specific UE. That is, the basic time unit to perform scheduling in 5G systems may be a slot, and the basic frequency unit to perform scheduling may be an RB.

The number ($N_{symb}^{slot}$) of OFDM symbols is determined according to the length of a cyclic prefix (CP) which is added to each symbol to prevent interference between symbols. For example, if a normal CP is applied, $N_{symb}^{slot}=14$, and if an extended CP is applied, $N_{symb}^{slot}=12$. The extended CP is applied to a system having a larger radio-wave transmission distance than the normal CP, thereby maintaining orthogonality between symbols. In the case of the normal CP, the ratio between the CP length and the symbol length may be maintained constant such that overhead caused by the CP is maintained constant regardless of the subcarrier spacing. That is, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to each other.

In order to satisfy various services and requirements in 5G systems, various frame structures may be supported by adjusting the subcarrier spacing. For example,

- In terms of the operating frequency band, the larger the subcarrier spacing, the more advantageous for restoration of phase noise in high-frequency bands.
- In terms of the transmission time, if the subcarrier spacing increases, the symbol length in the time domain decreases. The resulting decreased the slot length is advantageous for supporting an ultra-low latency service such as URLLC.
- In terms of the cell size, the larger the CP length, the larger cell can be supported. Therefore, the smaller the subcarrier spacing, the larger cell is supported. As used herein, a cell refers to a region covered by one gNB in connection with mobile communication.

The subcarrier spacing, the CP length, and the like correspond to information indispensable to OFDM transmission/reception, and a gNB and a UE need to recognize the subcarrier spacing, the CP length, and the like as mutually common values such that efficient transmission/reception is possible. [Table 1] describes the relationship between the subcarrier spacing configuration ($\mu$), the subcarrier spacing ($\Delta f$), and the CP length supported in 5G systems.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

[Table 2] enumerates the number ($N_{symb}^{slot}$) of slots per one slot, the number of slots ($N_{slot}^{frame,\mu}$) per one frame, and the number ($N_{slot}^{subframe,\mu}$) of slots per one subframe, with regard to each subcarrier spacing configuration ($\mu$), in the case of a normal CP.

[Table 2]

| $\mu$ | | | |
|---|---|---|---|
| 0 | 14 | 10 | 1 |
| 1 | 14 | 20 | 2 |
| 2 | 14 | 40 | 4 |

(continued)

| μ | | | |
|---|---|---|---|
| 3 | 14 | 80 | 8 |
| 4 | 14 | 160 | 16 |

[Table 3] enumerates the number ( $N_{symb}^{slot}$ ) of slots per one slot, the number of slots ( $N_{slot}^{frame,\mu}$ ) per one frame, and the number ( $N_{slot}^{subframe,\mu}$ ) of slots per one subframe, with regard to each subcarrier spacing configuration ($\mu$), in the case of an extended CP.

[Table 3]

| μ | | | |
|---|---|---|---|
| 2 | 12 | 40 | 4 |

In the early phase of introduction of 5G systems, at least coexistence with legacy LTE and/or LTE-A (hereinafter, referred to as LTE/LTE-A) or dual mode operation is expected. Accordingly, legacy LTE/LTE-A may provide stable system operations to UEs, and 5G systems may play the role of providing improved services to UEs. Therefore, the frame structure of 5G systems needs to include at least the frame structure of LTE/LTE-A or an essential parameter set (subcarrier spacing = 15kHz).

For example, a comparison between a frame structure having a subcarrier spacing configuration $\mu$=0 (hereinafter, referred to as frame structure A) and a frame structure having a subcarrier spacing configuration $\mu$=1 (hereinafter, referred to as frame structure B) shows, compared with frame structure A, that frame structure B has double the subcarrier spacing and RB size and half the slot length and symbol length. In the case of frame structure B, two slots may constitute one subframe, and 20 subframes may constitute one frame.

To generalize the framed structure of 5G systems, the subcarrier spacing, the CP length, the slot length, and the like (essential parameter set) are integer multiples with each other with regard to each frame structure, thereby providing a high degree of extendibility. In addition, a subframe having a fixed length of 1ms may be defined to represent a reference time unit unrelated to the frame structure.

The frame structure of 5G systems may be applied according to various scenarios. In terms of the cell size, the larger the cyclic prefix (CP) length, the larger cells can be supported. Therefore, frame structure A can support larger cells than frame structure B. In terms of the operating frequency band, the larger the subcarrier spacing, the more advantageous for restoration of phase noise in high-frequency bands. Therefore, frame structure B can support higher operating frequencies than frame structure A. In terms of the service, the smaller the slot length (basic time unit of scheduling), the more advantageous for supporting an ultra-low latency service (for example, URLLC). Therefore, frame structure B may be more appropriate for the URLLC service than frame structure A.

As used in the following description of the disclosure, the uplink may refer to a radio link via which a user equipment transmits data or control signals to a base station, and the downlink may refer to a radio link via which the base station transmits data or control signals to the user equipment.

In an initial access step in which a user equipment initially accesses a system, the user equipment may perform downlink time and frequency domain synchronization and acquire a cell identifier (ID) from a synchronization signal, transmitted by a base station, through a cell search. In addition, the user equipment may receive a physical broadcast channel (PBCH) by using the acquired cell ID and acquire a master information block (MIB) as mandatory system information from the PBCH. Additionally, the user equipment may receive system information (system information block (SIB)) transmitted by the base station to acquire cell-common transmission and reception-related control information. The cell-common transmission and reception-related control information may include random access-related control information, paging-related control information, common control information for various physical channels, etc.

A synchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied differently depending on a service type.

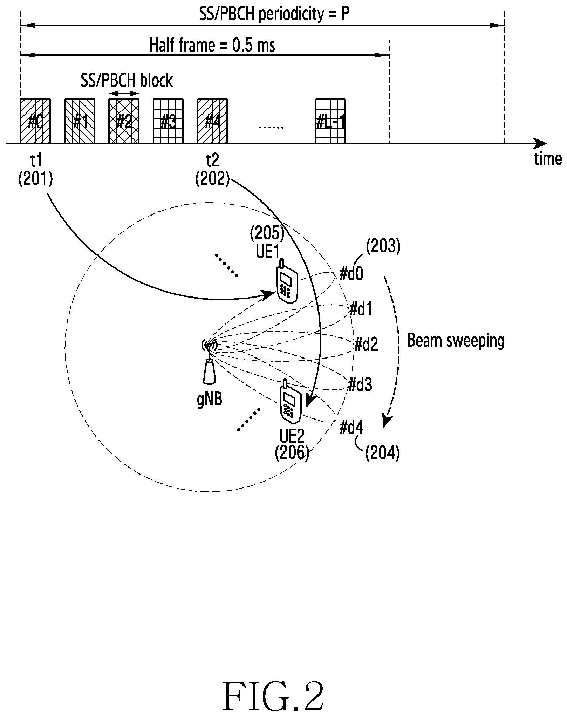

FIG. 2 illustrates an example of a beam sweeping operation and a time domain mapping structure of a synchronization signal

For the sake of description, the following elements may be defined.

- Primary synchronization signal (PSS): A PSS is a signal that serves as a reference for DL time/frequency synchronization, and provides a part of cell ID information.
- Secondary synchronization signal (SSS): An SSS serves as a reference for DL time/frequency synchronization, and provides the other part of the cell ID information. Additionally, the SSS may serve as a reference signal for PBCH demodulation of a PBCH.
- Physical broadcast channel (PBCH): A PBCH provides a master information block (MIB) which is essential system information required for transmission and reception of a data channel and a control channel of a UE. The mandatory system information may include search space-related control information indicating radio resource mapping information of a control channel, scheduling control information for a separate data channel for transmission of system information, a system frame number (SFN) which is a frame unit index that serves as a timing reference, and other information.
- Synchronization signal/PBCH block (SS/PBCH block) or SSB: An SS/PBCH block is configured by N OFDM symbols and may include a combination of a PSS, an SSS, a PBCH, etc. For a system to which a beam sweeping technology is applied, an SS/PBCH block is a minimum unit to which beam sweeping is applied. In the 5G system, N=4 may be satisfied. A base station may transmit up to a maximum of L SS/PBCH blocks, and the L SS/PBCH blocks are mapped within a half frame (0.5ms). In addition, the L SS/PBCH blocks are periodically repeated at predetermined periods P. The base station may inform a UE of period P via signaling. If there is no separate signaling of period P, the UE may apply a previously agreed default value.

Referring to FIG. 2, FIG. 2 illustrates an example in which beam sweeping is applied in units of SS/PBCH blocks over time. In the example of FIG. 2, UE 1 205 receives an SS/PBCH block by means of a beam emitted in direction #d0 201 by beamforming applied to SS/PBCH block #0 at time point t1 203. In addition, UE 2 206 receives an SS/PBCH block by means of a beam emitted in direction #d4 202 by beamforming applied to SS/PBCH block #4 at time point t2 204. The UE may acquire, from the base station, an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell.

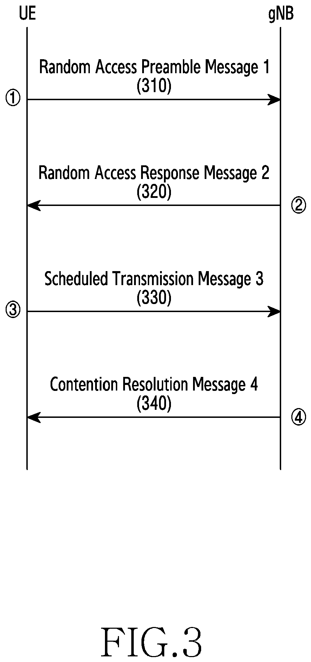

After acquiring an MIB and system information from the base station through the initial access procedure, the UE may perform a random access procedure in order to switch a link to the base station to a connected state (or RRC _CONNECTED state). Upon completing the random access procedure, the UE switches to a connected state in which one-to-one communication between the base station and the UE is possible. Hereinafter, a random access procedure will be described with reference to FIG. 3.

FIG. 3 illustrates an example of a random access procedure.

Referring to FIG. 3, in the first step 310 of the random access procedure, the UE may transmit a random access preamble to the gNB. The random access preamble is the first message transmitted by the UE in the random access procedure, and thus may be referred to as message 1. The gNB may measure the transmission delay value between the UE and the gNB from the random access preamble, and may make uplink synchronization. The UE may then arbitrarily select the random access preamble to be used, from a random access preamble set given by system information in advance. The initial transmission power of the random access preamble may be determined by the pathloss between the gNB and the UE, measured by the UE. The UE may also determine the transmission beam direction of the random access preamble from a synchronization signal received from the gNB and then transmit the random access preamble.

In the second step 320, gNB transmits an uplink transmission timing adjustment command to the UE, based on a transmission delay value measured from the random access preamble received in the first step 310. The gNB may also transmit a power control command and an uplink resource to be used by the UE, as scheduling information. The scheduling information may include control information regarding the UE's uplink transmission beam.

If the UE fails to receive a random access response (RAR) (or message 2) which is scheduling information regarding message 3 from the gNB within a predetermined time in the second step 320, the UE may perform the first step 310 again. When performing the first step 310 again, the UE may transmit the random access preamble after increasing the transmission power thereof by a predetermined step (power ramping), thereby increasing the probability that the gNB will receive the random access preamble.

In the third step 330, the UE transmits uplink data (message 3) including the UE's ID to the gNB through a physical uplink shared channel (PUSCH) by using the uplink resource allocated thereto in the second step 320. The transmission timing of the PUSCH for transmitting message 3 may follow the timing control command received from the gNB in the second step 320. The transmission power of the PUSCH for transmitting message 3 may be determined in consideration of a power control command received from the gNB in the second step 320 and the random access preamble's power ramping value. The PUSCH for transmitting message 3 may refer to the first uplink data signal transmitted to the gNB by the UE, after transmission of the random access preamble by the UE.

In the fourth step 340, upon determining that the UE has performed a random access without contention with other UEs, the gNB transmits data (message 4) including the ID of the UE which transmitted uplink data in the third step 330 to the corresponding UE. Upon receiving the signal transmitted by the gNB in the fourth step 340 from the gNB, the UE may determine that the random access has succeeded. The UE may then transmit HARQ-ACK information to the gNB through a physical uplink control channel (PUCCH) to indicate whether or not message 4 has been received successfully.

If the gNB fails to receive a data signal from the UE due to contention between the data transmitted by the UE in the third step 330 and data from another UE, the gNB may no longer transmit data to the UE. If the UE thus fails to receive data transmitted from the gNB in the fourth step 340 within a predetermined time, the UE may determine that the random access procedure has failed and may restart from the first step 310.

Upon successfully completing the random access procedure, the UE is switched to a connected state, and one-to-one communication between the gNB and the UE becomes possible. The gNB may receive UE capability information reported by the UE in the connected state, and may adjust the scheduling with reference to the UE capability information from the UE. The UE may inform the gNB whether the UE itself supports a specific function or not, the maximum allowed value of the function supported by the UE, and the like through the UE capability information. Therefore, UE capability information reported to the gNB by each UE may have a different value with regard to each UE.

As an example, the UE may report UE capability information including at least one of the following pieces of control information as UE capability information to the gNB.

- Control information regarding the frequency band supported by the UE
- Control information regarding the channel bandwidth supported by the UE
- Control information regarding the maximum modulation scheme supported by the UE
- Control information regarding the maximum number of beams supported by the UE
- Control information regarding the maximum number of layers supported by the UE
- Control information regarding the CSI reporting supported by the UE
- Control information regarding whether the UE supports frequency hopping
- Control information regarding the bandwidth when carrier aggregation (CA) is supported
- Control information regarding whether cross carrier scheduling is supported when CA is supported

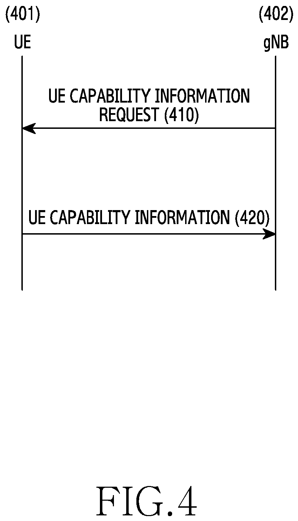

FIG. 4 illustrates an example of a procedure in which a UE reports UE capability information to a gNB.

Referring to FIG. 4, the gNB 402 may transmit a UE capability information request message to the UE 401 in step 410. The UE transmits UE capability information to the gNB in step 420 at the request for UE capability information of the gNB.

Through the above-described process, the UE connected to the gNB may conduct one-to-one communication as a UE in an RRC CONNECTED state. To the contrary, the UE having no connection may be a UE in an RRC_IDLE state, and operations of the UE in the RRC_IDLE state may be distinguished as follows. Obviously, the following example is not limitative.

- A UE-specific discontinuous reception (DRX) cycle operation configured by the upper layer
- An operation of receiving a paging message from the core network
- Acquiring system information
- A neighboring cell-related measurement operation and cell reselection

In 5G systems, a new UE state referred to as RRC_INACTIVE has been defined to reduce the energy and time consumed for the UE's initial access. The RRC _INACTIVE UE may perform the following operations in addition to operations performed by an RRC_IDLE UE. Obviously, the following example is not limitative.

- Storing access stratum (AS) information necessary for cell access
- A UE-specific DRX cycle operation configured by the RRC layer
- Configuring a RAN-based notification area (RNA) which may be utilized during a handover by the RRC layer, and periodically performing update
- Monitoring a RAN-based paging message transmitted through an I-RNTI

Hereinafter, a scheduling method in which the gNB transmits downlink data to the UE, or instructs the UE to transmit uplink data, will be described.

Downlink control information (DCI) refers to control information transmitted to from the gNB to a UE through the downlink, and may include downlink data scheduling information or uplink data scheduling information regarding a specific UE. In general, the gNB may independently channel-code DCI with regard to each UE and may transmit the same to each UE through a physical downlink control channel (PDCCH).

With regard to a UE to be scheduled, the gNB may apply and operate a predetermined DCI format according to the purpose, such as whether the same is scheduling information regarding downlink data (downlink assignment), whether the same is scheduling information regarding uplink data (uplink grant), or whether the same is DCI for power control.

The gNB may transmit downlink data to the UE through a physical downlink shared channel (PDSCH). Scheduling information such as detailed mapping locations in time and frequency domains of the PDSCH, the modulation scheme, HARQ-related control information, and power control information, may be provided from the gNB to the UE through DCI related to downlink data scheduling information among DCI transmitted through a PDCCH.

The UE may transmit uplink data to the gNB through a physical uplink shared channel (PUSCH). Scheduling information such as detailed mapping locations in time and frequency domains of the PUSCH, the modulation scheme, HARQ-related control information, and power control information, may be provided from the gNB to the UE through DCI related to uplink data scheduling information among DCI transmitted through a PDCCH.

The time-frequency resource to which the PDCCH is mapped is referred to as a control resource set (CORESET). The CORESET may be configured in all or part of frequency resources in a bandwidth supported by the UE in the frequency domain. One or multiple OFDM symbols may be configured as the same in the time domain, and this may be defined as a control resource set (CORESET) duration. The gNB may configure one CORESET or multiple CORESETs for the UE through upper layer signaling (for example, system information, master information block (MIB), radio resource control (RRC) signaling). The description that a CORESET is configured for the UE may mean that information such as the CORESET identity, the CORESET's frequency location, and the CORESET's symbol length is provided thereto. Pieces of information provided from the gNB to the UE to configure a CORESET may include at least a part of the information included in [Table 4] below:

[Table 4]

```
ControlResourceSet ::=            SEQUENCE {
        controlResourceSetId              ControlResourceSetId,
            (CORESET identity)
        frequencyDomainResources          BIT STRING (SIZE (45)),
            (frequency domain resource)
        duration                                        INTEGER
(1..maxCoReSetDuration),
            (CORESET duration)
        cce-REG-MappingType              CHOICE {
            (CCE-to-REG mapping type)
            interleaved                 SEQUENCE {
```

```
                reg-BundleSize          ENUMERATED {n2, n3, n6},
                        (REG bundle size)
                        interleaverSize          ENUMERATED {n2, n3, n6},
                        (interleaver size)
                        shiftIndex
INTEGER(0..maxNrofPhysicalResourceBlocks-1)          OPTIONAL -- Need S
                        (interleaver shift)
            },
            nonInterleaved                 NULL
        },
        precoderGranularity            ENUMERATED {sameAsREG-bundle,
allContiguousRBs},
            (precoding unit)
            tci-StatesPDCCH-ToAddList          SEQUENCE(SIZE (1..maxNrofTCI-
StatesPDCCH)) OF TCI-StateId OPTIONAL, -- Cond NotSIB1-initialBWP
            (QCL configuration information)
            tci-StatesPDCCH-ToReleaseList      SEQUENCE(SIZE  (1..maxNrofTCI-
StatesPDCCH)) OF TCI-StateId OPTIONAL, -- Cond NotSIB1-initialBWP
            (QCL configuration information)
        tci-PresentInDCI                 ENUMERATED {enabled}
OPTIONAL, -- Need S
            (QCL indicator configuration information in DCI)
        pdcch-DMRS-ScramblingID                 INTEGER  (0..65535)
OPTIONAL, -- Need S
            (PDCCH DMRS scrambling identifier)
}
```

A  CORESET  may  be  configured  by  $N_{RB}^{CORESET}$  RBs  in  the  frequency  domain  and $N_{symb}^{CORESET} \in \{1,2,3\}$ symbols in the time domain. An NR PDCCH may be configured by one or multiple control channel elements (CCEs). One CCE may be configured by six resource element groups (REGs), and each REG may be defined as one RB during one OFDM symbol. In one CORESET, REGs may be indexed in the time-first order, starting from REG index 0 in the CORESET's first CORESET symbol/lowest RB.

As a PDCCH-related transmission method, an interleaved type and a non-interleaved type may be supported. The gNB may configure, for the UE, whether interleaved or non-interleaved transmission is performed with regard to each CORESET through upper layer signaling. Interleaving may be performed at the REG bundle level. The REG bundle may be defined as one REG or a set of multiple REGs. Based on the gNB's configuration regarding whether interleaved or non-interleaved transmission is performed, the UE may determine a CCE-to-REG mapping type in the corresponding CORESET as in [Table 5] below:

[Table 5]

The CCE-to-REG mapping for a control-resource set can be interleaved or non-interleaved and is described by REG bundles:

- REG bundle $i$ is defined as REGs $\{iL, iL+1....iL+L-1\}$ where $L$ is the REG bundle size, $i = 0, 1, ..., N_{REG}^{CORESET}/L - 1$, and $N_{REG}^{CORESET} = N_{RB}^{CORESET} N_{symb}^{CORESET}$ is the number of REGs in the CORESET

- CCE $j$ consists of REG bundles $\{f(6j/L), f(6j/L+1),...f(6j/L+6/L-1)\}$ where $f(\cdot)$ is an interleaver

For non-interleaved CCE-to-REG mapping, $L = 6$ and $f(x) = x$.

For interleaved CCE-to-REG mapping, $L \in \{2,6\}$ for $N_{symb}^{CORESET} = 1$ and $L \in \{N_{symb}^{CORESET}, 6\}$ for $N_{symb}^{CORESET} \in \{2,3\}$. The interleaver is defined by

$$f(x) = (rC + c + n_{shift}) \bmod \left(N_{REG}^{CORESET}/L\right)$$
$$x = cR + r$$
$$r = 0, 1, ... , R - 1$$
$$c = 0, 1, ... , C - 1$$
$$C = N_{REG}^{CORESET}/(LR)$$

where $R \in \{2,3,6\}$.

The gNB may provide the UE with configuration information regarding to which symbol the PDCCH is mapped in the slot, the transmission period, and the like through signaling.

A description of a search space for a PDCCH is as follows. The number of CCEs necessary to transmit a PDCCH may be 1, 2, 4, 8, or 16 according to aggregation levels (ALs), and different number of CCEs may be used to implement link adaption of a downlink control channel. For example, in the case of AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured ALs.

The search spaces may be classified into common search spaces (CSSs) and UE-specific search spaces (USSs). A group of UEs or all UEs may search a common search space of the PDCCH in order to receive cell-common control information such as dynamic scheduling regarding system information or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity (ID) of the UE.

Configuration information of the search space for the PDCCH may be configured for the UE by the base station through upper layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, parameters of the search space for the PDCCH may include the following pieces of information given in Table 6 below.

[Table 6]

| SearchSpace ::= | SEQUENCE { | |
|---|---|---|
| searchSpaceId | SearchSpaceId, | |
| (search space identity) | | |
| controlResourceSetId | | ControlResourceSetId |
| OPTIONAL, -- Cond SetupOnly | | |

```
(CORESET identity)
        monitoringSlotPeriodicityAndOffset CHOICE {
(monitoring slot level periodicity and offset)
                sl1                             NULL,
                sl2                             INTEGER (0..1),
                sl4                             INTEGER (0..3),
                sl5                             INTEGER (0..4),
                sl8                             INTEGER (0..7),
                sl10                            INTEGER (0..9),
                sl16                            INTEGER (0..15),
                sl20                            INTEGER (0..19),
                sl40                            INTEGER (0..39),
                sl80                            INTEGER (0..79),
                sl160                           INTEGER (0..159),
                sl320                           INTEGER (0..319),
                sl640                           INTEGER (0..639),
                sl1280                          INTEGER (0..1279),
                sl2560                          INTEGER (0..2559)
        }
OPTIONAL,     -- Cond Setup
        duration                        INTEGER              (2..2559)
OPTIONAL,     -- Need R
        (monitoring duration)
        monitoringSymbolsWithinSlot                  BIT   STRING   (SIZE   (14))
OPTIONAL,     -- Cond Setup
        (monitoring symbol locations within slot)
        nrofCandidates                  SEQUENCE {
(number of PDCCH candidates for each aggregation level)
                aggregationLevel1               ENUMERATED {n0, n1, n2, n3, n4, n5, n6,
n8},
                aggregationLevel2               ENUMERATED {n0, n1, n2, n3, n4, n5, n6,
n8},
```

```
                aggregationLevel4              ENUMERATED {n0, n1, n2, n3, n4, n5, n6,
n8},

                aggregationLevel8              ENUMERATED {n0, n1, n2, n3, n4, n5, n6,
n8},

                aggregationLevel16             ENUMERATED {n0, n1, n2, n3, n4, n5, n6,
n8}
            }
OPTIONAL,      -- Cond Setup
            searchSpaceType                    CHOICE {
        (search space type)
                common                         SEQUENCE {
            (common search space)
                    dci-Format0-0-AndFormat1-0     SEQUENCE {
                    ...
                    }
OPTIONAL,      -- Need R
                    dci-Format2-0                  SEQUENCE {
                        nrofCandidates-SFI             SEQUENCE {
                            aggregationLevel1             ENUMERATED {n1, n2}
OPTIONAL,      -- Need R
                            aggregationLevel2             ENUMERATED {n1, n2}
OPTIONAL,      -- Need R
                            aggregationLevel4             ENUMERATED {n1, n2}
OPTIONAL,      -- Need R
                            aggregationLevel8             ENUMERATED {n1, n2}
OPTIONAL,      -- Need R
                            aggregationLevel16            ENUMERATED {n1, n2}
OPTIONAL       -- Need R
                        },
                    ...
                    }
OPTIONAL,      -- Need R
                    dci-Format2-1                  SEQUENCE {
```

```
                              ...
                            }
OPTIONAL,     -- Need R
                dci-Format2-2              SEQUENCE {
                              ...
                            }
OPTIONAL,     -- Need R
                dci-Format2-3              SEQUENCE {
                    dummy1                     ENUMERATED {sl1, sl2, sl4,
sl5, sl8, sl10, sl16, sl20}   OPTIONAL,      -- Cond Setup
                    dummy2                     ENUMERATED {n1, n2},
                              ...
                            }
OPTIONAL       -- Need R
                },
                ue-Specific               SEQUENCE {
            (UE-specific search space)
                    dci-Formats                   ENUMERATED  {formats0-0-
And-1-0, formats0-1-And-1-1},
                    ...,

                          }
                        }
OPTIONAL      -- Cond Setup2
                  }
```

According to configuration information, the base station may configure one or multiple search space sets for the UE. According to an embodiment of the disclosure, the base station may configure search space set 1 and search space set 2 for the UE. In search space set 1, the UE may be configured to monitor DCI format A scrambled by an X-RNTI in a common search space, and in search space set 3, the UE may be configured to monitor DCI format B scrambled by a Y-RNTI in a UE-specific search space.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

In a common search space, the UE may monitor combinations of DCI formats and RNTIs given below. Obviously, the example given below is not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In a UE-specific search space, the UE may monitor combinations of DCI formats and RNTIs given below. Obviously, the example given below is not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs enumerated above may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI (RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI (INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given in Table 7 below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM s ymbol(s) where UE may assume no transmission is inte nded for the UE |
| 2_2 | Transmission of TPC commands for PUCCH and PUSC H |
| 2_3 | Transmission of a group of TPC commands for SRS tr ansmissions by one or more UEs |

The search space at aggregation level L in connection with CORESET p and search space set s may be expressed by the following equation.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level
- $n_{CI}$: carrier index
- $N_{CCE,p}$ : total number of CCEs existing in control resource set p
- $n_{s,f}^{\mu}$ : slot index
- $M_{s,max}^{(L)}$ : number of PDCCH candidates at aggregation level L

- $m_{s,n_{CI}} = 0, \ldots, M_{s,max}^{(L)} - 1$ : PDCCH candidate index at aggregation level L

- $i = 0, \ldots, L - 1$

- $Y_{p,n_{s,f}^{\mu}} = \left( A_p \cdot Y_{p,n_{s,f}^{\mu}-1} \right) \bmod D$, $Y_{p,-1} = n_{RNTI} \neq 0$, $A_p = 39827$ *for pmod3 = 0*, $A_p = 39829$ *for pmod3 = 1*, $A_p = 39839$ *for pmod3 = 2*, $D = 65537$

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

As described above, signal transmission/reception in super-broad bandwidths ranging from tens or hundreds of MHz or multiple GHz may be supported to accomplish a super-fast data service at multiple Gbps in 5G systems. Signal transmission/reception in super-broad bandwidths may be supported through a single component carrier (CC) or through a carrier aggregation (CA) technology which combines multiple CCs. If the mobile communication operator fails to secure frequencies in a bandwidth enough to provide a super-fast data service by using a single CC, the CA technology combines respective CCs having a relatively small bandwidth size such that the total sum of frequency bandwidths is increased, consequently enabling a super-fast data service.

5G systems are designed and developed in consideration of all of various use cases. Besides the standby time, reliability, and availability, the UE's energy efficiency is critical in 5G systems. 5G UEs need to be charged on a weekly or daily basis according to the individuals' time of use. In general, 5G UEs consume tens of mW in RRC _IDLE/RRC_INACTIVE states, and consume hundreds of mW in RRC_CONNECTED states. Design for extending the battery life is an indispensable element not only for better user experiences, but also for improved energy efficiency. Energy efficiency is more important to UEs having no continuous energy supply, for example, UEs using small rechargeable and single coin cell batteries. Among 5G use cases, sensors and actuators are arranged for monitoring, measurement, charging, and the like on a wide scale. In general, batteries for sensors or actuators cannot be recharged, and are expected to last at least a number of years. In addition, wearable devices such as smartwatches, rings, eHealth-related devices, and medical monitoring devices can hardly last a maximum of 1-2 weeks, depending on the time of use.

According to an embodiment, a 5G UE's power consumption depends on the configured length of wakeup periods, for example, the paging cycle, and it is expected that an extended discontinuous reception (eDRX) cycle having a large value will be used to satisfy battery lifetime requirements. However, the eDRX scheme maintains a long battery lifetime on the basis of a long standby time, and thus is inappropriate for a service having a short standby time. For example, in the case of use for fire sensing and extinguishing, it is within 1-2 seconds from the timepoint at which a fire is sensed by a sensor that fire shutters need to be closed, and sprinklers need to be activated by actuators. That is, in a use case having a critical standby time, a long eDRX cycle as in existing cases cannot satisfy latency requirements, and the eDRX is thus inappropriate for such a case.

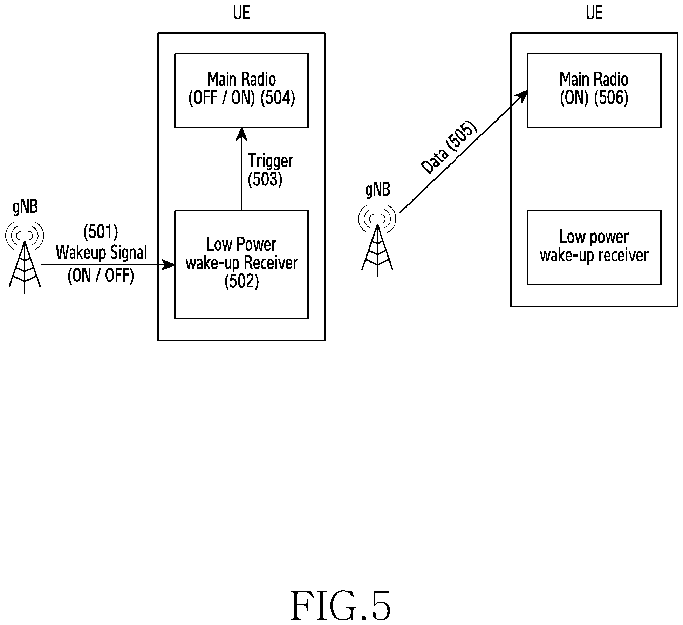

According to an embodiment, a 5G UE may need to periodically wake up once per eDRX cycle, and this may dominate power consumption during a period of time having no signaling or data traffic. Power consumption could be substantially reduced if the UE could wake up only when triggered (for example, through paging). This may be accomplished by a method, as in FIG. 5, wherein the main radio (existing NR radio) is triggered by using a wake-up signal (WUS), and the main radio is turned on only when data transmission/reception is necessary by using a wake-up receiver (WUR) which is a separate receive capable of monitoring the WUS with super-low power.

For example, if the gNB transmits a WUS 501 corresponding to ON or OFF to the UE, the UE receives the WUS by using the WUR 502. According to whether the received signal is ON or OFF information, the main radio 504 in an ON or OFF state is triggered (503), thereby configuring a state in which the same is woken up or powered off. Depending on the case, the UE may configure the main radio 504 to be in a deep sleep state without fully turning off the same. If there occurs data traffic 505 to be sent from the gNB to the UE, and if a WUS corresponding to ON is thus transmitted, the main radio is turned on 506, and the UE receives data sent by the gNB through the main radio (not through the WUR). Power consumed by monitor the WUS depends on design of the WUS design and hardware modules of the WUR used to detect and process signals, and it is thus expected that the gain will be maximized with regard to devices which are sensitive to power and have small form factors, including wearable devices, and IoT use cases (such as industrial sensors and controllers), in particular.

A UE having the above-described structure additionally needs WUR-related states in addition to existing RRC states (RRC _CONNECTED, RRC_INACTIVE, RRC _IDLE) limited to the main radio. In addition, if states of the WUR are determined due to a low-latency/low-power technique that uses the WUS, the state regarding the main radio may be changed, and the relationship between the WUR state and the main radio state also needs to be redefined.

Hereinafter, a method in which a UE having a wakeup receiver saves energy, proposed in the disclosure, will be described with reference specific embodiments.

\<First embodiment\>

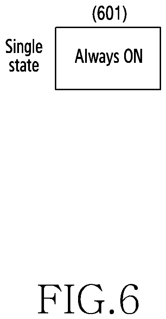

In the first embodiment, for the sake of power saving by a UE including a wake-up receiver (WUR), the UE's WUR state is divided, and operations of the UE during a state transition will be described. The UE' s WUR state may be divided into a single state, a dual state, and a multi-state according to the frequency at which the WUR is turned on, and respective states will be described in detail with reference to FIG. 6 to FIG. 8.

FIG. 6 illustrates the UE's WUR in a single state. In the case of the single state, the WUR may be always turned on (601). Since the WUR is always turned on (601), the WUR may always monitor a WUS regardless of the UE's main radio's state (RRC_INACTIVE, RRC_IDLE, RRC_CONNECTED) or without being affected by the main radio's state. There is substantially no need to define additional states regarding the WUR if the single state is reached.

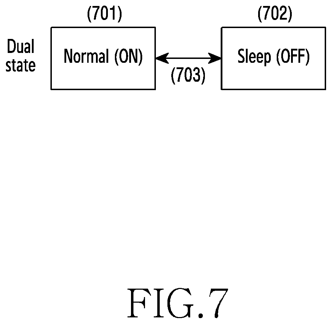

FIG. 7 illustrates a state transition when the UE's WUR is in a dual state. The WUR is in an ON state 701 only when a WUS needs to be received from the gNB, and is on an OF state 702 in other cases. In an embodiment, it may be determined whether the WUR's state may be an ON state 701 or an OFF state 702 according to whether the main radio can receive data or not. For example, in a situation in which the main radio is receiving data as indicated 505 in FIG. 5, the WUR may maintain an OFF state 702. The WUR may maintain an ON state 701 through a process 703 only when receiving the WUS 501 in FIG. 5 in order to turn off the main radio because data reception is over, or to induce a deep sleep state thereof. Therefore, compared with the single state, the WUR's power may be saved during the time corresponding to the OFF state, and the UE's more power saving may thus be possible.

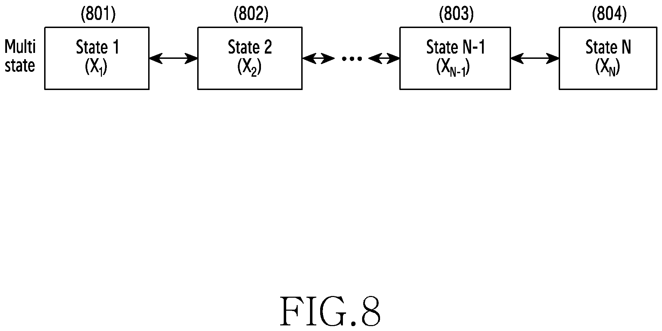

FIG. 8 illustrates a state transition when the UE's WUR is in a multi-state. As an example, in which the multi-state is available, an additional state may be necessary if it is expected that no WUS will be received for a long period of time, for example, IoT for distribution checkup, at a specific timepoint. In this case, N states may be defined according to the frequency at which the WUS is received, as indicated by 801 to 804. Assuming that the frequency at which the WUS is received in the $n^{th}$ state is $X_n$, it is possible to apply and operate $X_n$ values which may be predefined or upper-layer-configured by the gNB, such as $X_1 > X_2 > .., > X_{N-1} > X_N$. Each state may transition only to an adjacent state, as in the multi-state in FIG. 7, or may transition to states other than adjacent states, depending on the case, under the determination by the gNB or UE. Names given above with reference to FIG. 6 to FIG. 8 are only examples, and each UE's WUR states may be described differently.

\<Second embodiment\>

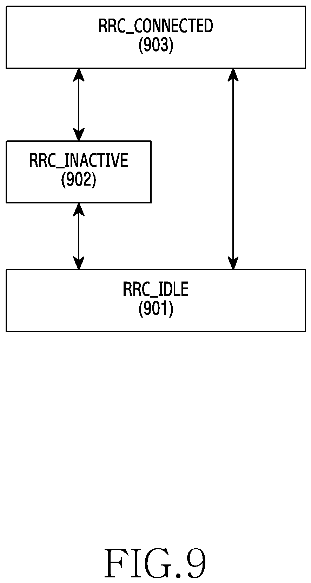

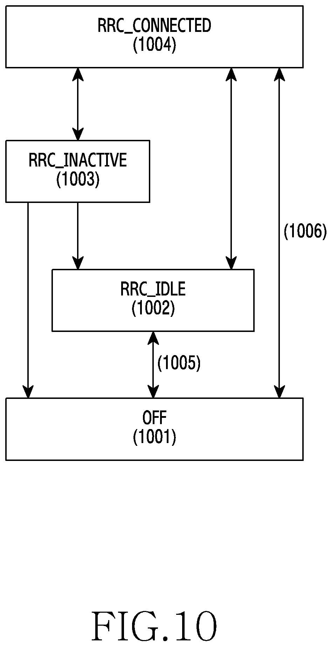

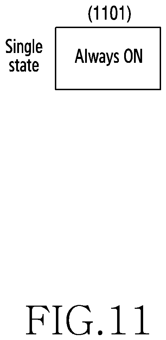

In the second embodiment, for the sake of power saving by a UE including a wake-up receiver, the main radio's state is divided in a state in which the UE's WUR state is defined, and operations of the UE during a state transition will be described. In the disclosure, the UE's main radio state may be largely divided in two methods. Respective states in the first method which involves no redefinition will be described in detail with reference to FIG. 9 and FIG. 10, and respective states in the second method which involves redefinition will be described in detail with reference to FIG. 11 to FIG. 13.

FIG. 9 illustrates the UE main radio's state, which remains an existing RRC state, as states of the WUR are determined due to a low-latency/low-power technique that uses a WUS. The RRC _CONNECTED 903 UE has completed an initial access procedure such that one-to-one communication between the gNB and the UE is possible, but the RRC_INACTIVE 902 UE or RRC_IDLE 901 UE mainly performs an operation of receiving cell-common control information such as the gNB's system information or paging messages. Channels available for transmission/reception are limited according to the UE's state. Therefore, if the WUR receives a WUS that indicates the OFF state of the main radio from the gNB, the main radio may convert to the RRC_INACTIVE 902 or RRC_IDLE 901 state and transition to a sleep mode (deep sleep, light sleep, micro sleep, or the like) according to the UE's determination. The gNB recognizes that the UE's state is only RRC_INACTIVE 902 or RRC _IDLE 901 state as in existing cases, and the UE may operate as defined by specifications for the sake of RRC_INACTIVE 902 or RRC IDLE 901.

FIG. 10 illustrates the UE main radio's state, which remains an existing RRC state, as states of the WUR are determined due to a low-latency/low-power technique that uses a WUS, as well as an additional OFF state 1001 defined therefor. Similarly to FIG. 9, existing RRC states 1002 to 1004 are used before the WUR receives a WUS that indicates the OFF state of the main radio from the gNB, and are transitioned to the OFF state 1001 after the WUS is received. That is, a mode in which the UE performs no operation and consumes only standby power for the sake of the UE's power saving is referred to as the OFF state 1001. If the UE's main radio operates in the OFF state 1001, the same does not receive any gNB system information and related control channels, except for the WUS. However, the UE's substantial state or information is stored in the lastly connected gNB, and if the UE's WUR receives a WUS corresponding to the ON state, the same may return to the lastly connected gNB in the RRC_IDLE 1002 state and may receive cell-common control information such as system information of the gNB or paging messages (1005), or may undergo a state transition 1006 back to RRC _CONNECTED through a random access.

FIG. 11 illustrates the UE main radio state, which is redefined as a single state, as states of the WUR are determined due to a low-latency/low-power technique that uses a WUS. If the UE's main radio is in the single state, the same is always turned on (1101), and the largest amount of power is consumed in this scenario, which may thus be applied only when the UE's power consumption is not a problem.

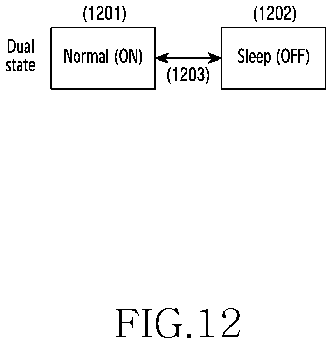

FIG. 12 illustrates the UE main radio state, which is redefined as a dual state, as states of the WUR are determined due to a low-latency/low-power technique that uses a WUS. Since the WUR performs all procedures for power saving, the WUR triggers (1203) switching between the ON state 1201 and the OFF state 1202.

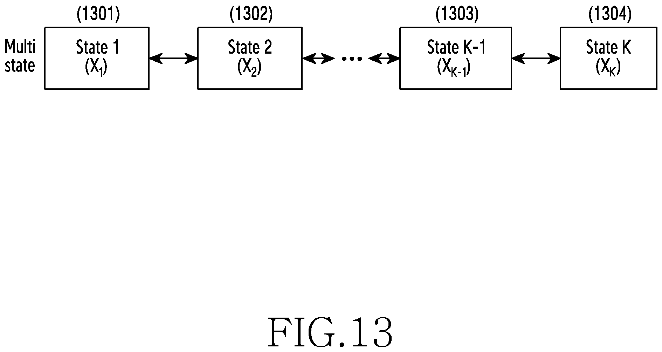

FIG. 13 illustrates the UE main radio state, which is redefined as a multi-state, as states of the WUR are determined due to a low-latency/low-power technique that uses a WUS. K steps 1301 to 1304 may be defined, instead of two steps of ON/OFF, with reference to the time for which the main radio may continuously sleep, the power-saving level at which RF components may be turned off, or the energy harvesting level, for example. Assuming that the sleep level of the $k^{th}$ state is $X_k$, predefined $X_k$ values may be applied and operated such as $X_1>X_2>...>X_{K-1}>X_K$. Each state may transition only to an adjacent state, as in the multi-state in FIG. 13, or may transition to states other than adjacent states, depending on the case, under the determination by the gNB or UE. Names given above with reference to FIG. 9 to FIG. 13 are only examples, and each UE's main radio states may be described differently.

<Third embodiment>

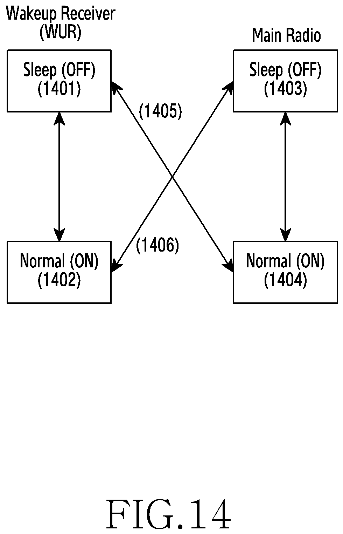

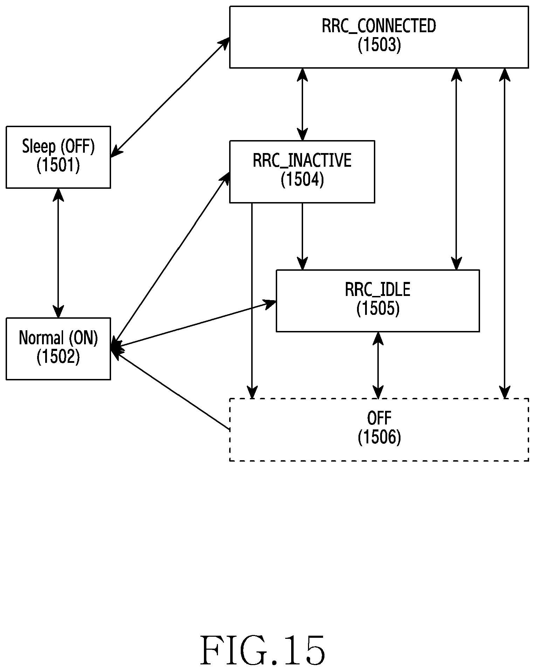

In the third embodiment, for the sake of power saving by a UE having a wakeup receiver, in a situation in which the UE's WUR state and the main radio's state are defined, the relationship between the two states will be described. If the WUR state is always ON, as in FIG. 6, regardless of the main radio's state, all states of the main radio may be connected to, according to which WUS is received. Therefore, the WUS may include information indicating all states of the main radio. The WUR has very low power, but continuously wastes power. Therefore, it will be assumed in following descriptions with reference to FIG. 14 and FIG. 15 that the WUR has two or more states.

FIG. 14 illustrates the relation between two states when the WUR and the main radio both have a dual state of ON/OFF. According to an embodiment, the WUR's state may be the opposite of the main radio's state, based on the main radio's state. That is, the WUR's state may be implicitly determined from the main radio's state. For example, in a situation in which the main radio is receiving data, the WUR may maintain the OFF state 1401 if the main radio is turned on (1404). If the main radio reaches an idle state after finishing receiving data, the WUR reaches an ON state 1402 after a predetermined time, and the main radio reaches an OFF state 1403. If traffic occurs again and thus requires data transmission, a WUS corresponding to an ON state is first received through the WUR, and main radio ON 1404 is then triggered (1405), thereby turning on the main radio.

In other cases, the gNB may transmit a WUS corresponding to an OFF state in order to turn off the main radio or to send the same to a deep sleep state in the above case. The WUR 1402 in an ON state triggers (1406) main radio OFF, and the main radio reaches an OFF state 1403. It may be implied that, if the WUR's state transition from the OFF state 1401 to the ON state 1402 without the gNB's intervention is not clear, the gNB will not depend on the WUS/WUR. Thereafter, the WUR maintains the OFF state 1401, and the main radio may perform legacy operations (RRC states).

That is, the difference in the two cases lies whether the gNB intervenes or not in connection with turning off the main radio or sending the same to a deep sleep state, although waking up the main radio is identically triggered by a WUS.

FIG. 15 illustrates the relation between two states when the WUR has a dual state of ON/OFF, and the main radio maintains an existing RRC state. The example in FIG. 15 corresponds to a situation in which the main radio maintains an RRC state of existing specifications, and only WUR states are added. The WUR's OFF state 1501 is connected to the main radio's RRC_CONNECTED state 1503, and the ON state 1502 thereof may be connected to the main radio's RRC_INACTIVE 1504 and RRC_IDLE state 1505. Alternatively, the ON state 1502 may be connected to the main radio's RRC _CONNECTED 1503. Obviously, if the main radio additionally has an OFF state 1506 as described with reference to FIG. 10, the main radio's OFF state 1506 is also connected to the WUS's ON state 1502.

Additionally, even if the WUR fails to receive a WUS, the same may maintain the ON state for the fallback purpose, in some cases. That is, even if the WUR can go to the OFF state in FIG. 14, the WUR may maintain the ON state, or the ON state may be triggered, in specific cases. For example, it may be assumed that a gNB informs a UE of a handover. Then, the WUR may be maintained in the ON state for the purpose of waking up the main radio for the sake of a handover between gNB no. 1 which supports the WUR and gNB no. 2 which does not support the WUR. As another example, if the main radio's wake time is periodically configured by the gNB (for example, if the main radio needs to periodically receive data), the WUR may automatically wake up the main radio according to the period.

Lastly, a situation in which the WUR has a multi-state in FIG. 8 may be considered. As described above, it is assumed that no WUS is received for a long time, and the same is determined according to the frequency at which the WUS is received. Therefore, most states are mapped to the main radio's RRC_INACTIVE or RRC_IDLE state, and it is expected that the same will be similar to a DRX operation in the RRC_INACTIVE or RRC_IDLE state. That is, in the case of a UE in the RRC_INACTIVE or RRC_IDLE state, the DRX operation is related to paging detection. Specifically, the UE needs to sense the paging situation with regard to each DRX period for paging message and system information updates, and the frequency (parameter) at which the WUS is received in each state of the WUR plays the same role as the DRX period.

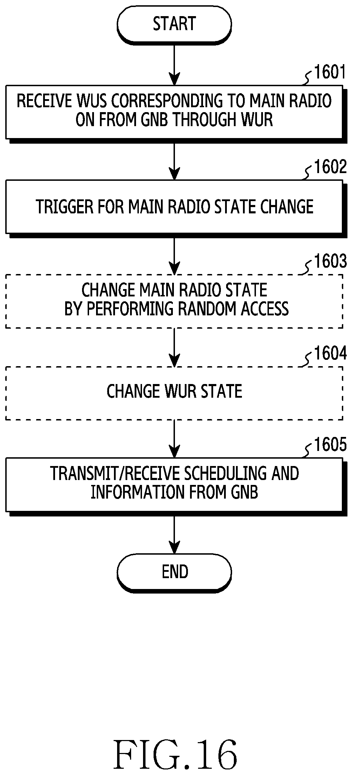

FIG. 16 illustrates a UE's generalized procedure in a state transition process for the UE's main radio operation.

In step 1601, if data traffic regarding a target UE occurs, the gNB transmits a WUS for triggering the main radio's ON because the UE's RRC_CONNECTED state or the main radio's reception is necessary. The WUS for triggering the main radio's ON may include simple information for simply triggering the main radio's ON, or may express information which may be mapped to the WUR multi-state in FIG. 8 or to the main radio's multi-state, thereby expressing various states. For example, since immediate data transmission may not be necessary, the gNB may transmit information to the UE to indirectly indicate that the main radio needs to be ready to receive data at a timepoint at least at which data transmission is necessary, by adjusting the ON frequency of the main radio or the sleep mode thereof. The UE may receive a WUS by the WUR so as to identify which operation is indicated by the WUS.

In step 1602, the UE performs a trigger such that the main radio can operate through the received WUS. The trigger performed by the UE for the main radio's operation may differ depending on the main radio's state expression. Firstly, in a case in which the existing RRC state is maintained as in FIG. 9 to FIG. 10, a trigger is performed such that an RRC_CONNECTED is reached through a random access because the UE's main radio is in the RRC_INACTIVE or RRC_IDLE or OFF state. Alternatively, in a case in which the UE's main radio is in the RRC_CONNECTED state, there may be no need to perform a random access, and step 1603 may thus be omitted. On the other hand, in a case in which the main radio state is redefined as in FIG. 11 to FIG. 13, the UE may likewise perform a trigger such that an ON state is reached through a random access or in the case of a multi-case, in particular, may perform a trigger such that a random access can be made after timepoint $X_k$.

In step 1603, the UE performs a random access according to the trigger timepoint in step 1602. The random access varies depending on the state defined in the main radio, such as RRC_INACTIVE, RRC_IDLE, or the like. For example, in the case of RRC_INACTIVE, Msg3 may include RRCResumeRequest in order to go to RRC_CONNECTED, and in the case of RRC_IDLE or OFF, RRCSetupRequest may be included. Additionally, Msg3 includes EstablishmentCause which indicates the reason to change to the RRC_CONNECTED or ON state, and an additional message may need to be defined to indicate a trigger by the WUR because it is not an existing paging operation.

In step 1604, the UE may change to an appropriate state if the WUR's state change is necessary after a change to the RRC_CONNECTED or ON state as a result of a random access normally performed by the main radio. Step 1406 may be omitted if the WUR is always in the ON state as in FIG. 6. However, such a state change may be necessary if the WUR is changed to the opposite state of the main radio's state. If the WUR is changed to the opposite state of the main radio's state, signaling with the gNB is not necessary because such an operation is generally performed inside the UE. However, the UE may inform the gNB of the WUR's state because a signal regarding the UE's main radio operation suspension may be received through a WUS.

Operations between the UE and the gNB from step 1605 are identical to existing operations. Upon receiving gNB state transition signaling, UEs operate according to parameters configured by the gNB and receive data.

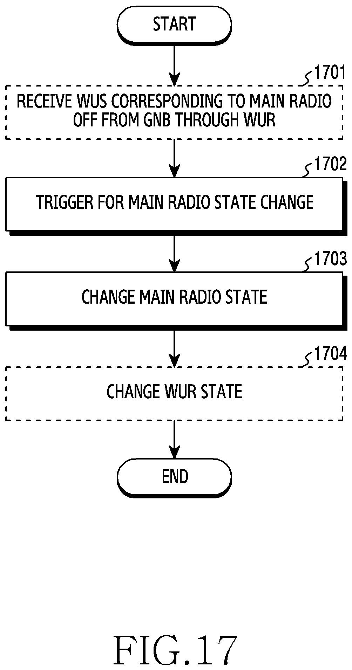

FIG. 17 illustrates a UE's generalized procedure in a state transition process for the UE's main radio operation suspension.

In step 1701, if there is no data to be transmitted to a target UE, the gNB may transmit a WUS for triggering the UE's RRC_IDLE/RRC_INACTIVE or the main radio's OFF state such that the UE reaches the RRC_IDLE/RRC_INACTIVE or the main radio reaches the OFF state. The WUS for triggering the UE's RRC_IDLE/RRC_INACTIVE or the main radio's OFF state may include simple information for simply indicating the main radio's OFF, or may express information which may be mapped to the WUR multi-state in FIG. 8, thereby expressing various states. For example, since the gNB may adjust the priority regarding immediate data transmission, the UE may adjust the main radio's state by adjusting the frequency. The UE may receive a WUS that triggers the UE's RRC IDLE/RRCINACTIVE or the main radio's OFF state through the WUR so as to identify which operation is indicated by the WUS. If the WUR has been turned off, the UE may operate the main radio in existing RRC states.

In step 1702, the UE may trigger an operation in which the main radio can change the state through the received WUS. Since the UE's main radio is in the RRC_CONNECTED state or ON state, the UE performs a trigger such that the same can remain in the RRC_INACTIVE or RRC_IDLE or OFF state. Alternatively, the UE's main radio may maintain the RRC_CONNECTED state. In existing operations, an RRC message referred to as RRCRelease has been received from the gNB for a state change to RRC_INACTIVE or RRC_IDLE, and in step 1702, the UE may determine that an RRC message such as RRCRelease has been indicated indirectly through a WUS. Similarly to step 1602, if the main radio is in a multi-state, the UE may perform a trigger such that a state transition can occur after timepoint $X_k$.

In step 1703, according to the trigger in step 1702, the main radio's state may be normally changed to the RRC

_INACTIVE or RRC _IDLE state or quasi-OFF state.

In step 1704, the WUR's state change may be performed in a state in which the main radio's state is normally changed to the RRC_INACTIVE or RRC_IDLE state or quasi-OFF state. Step 1704 may be omitted if the WUR is always in the ON state as in FIG. 6. However, the WUR's state change is necessary if the WUR is changed to the opposite state of the main radio's state. The UE needs no additional signaling with the gNB because the gNB has already indirectly informed of RRCRelease through a WUS as in step 1701.

The disclosure may also be performed by omitting the above-described steps in FIG. 16 and FIG. 17, changing the order thereof, or adding undescribed steps.

<Fourth embodiment>

Existing embodiments have mainly considered cases in which the gNB recognizes the main radio's state, and a state transition to the opposite state, for example, is necessary. This embodiment considers an additional case in which a WUS in the same state as the main radio comes in. For example, if the WUR is configured in an ON state and is ready to receive a WUS, and if the main radio is ON, the gNB sends a WUS indicating an OFF state such that the UE's main radio transitions to the OFF state (or RRC INACTIVE or RRC IDLE). Since the gNB is aware of the main radio's state, no WUS is sent to indicate the main radio's ON state, according to existing embodiments, if the main radio is in the ON state. However, a WUS may be sent to indicate the main radio's ON state, even if the main radio is in the ON state, in order to urge the main radio to be quickly ready to receive data because there is data to be transmitted urgently in the case of urgent termination of DRX, for example.

On the other hand, in the main radio's OFF state, a WUS indicating the main radio's OFF state may be received from the gNB. Since the gNB is aware of the main radio's state, no WUS is sent to indicate the main radio's OFF state, according to existing embodiments, if the main radio is in the OFF state. However, a WUS may be sent to indicate the main radio's OFF state, even if the main radio is in the OFF state, in order to inform without additional DCI that the main radio in the RRC_CONNECTED state is delaying PDCCH monitoring (for example, DCI 2_6), or to transition the state which has been maintained as RRC CONNECTED to RRC_INACTIVE/RRC_IDLE. That is, the WUS may be used to play a role comparable to that of RRCRelease.

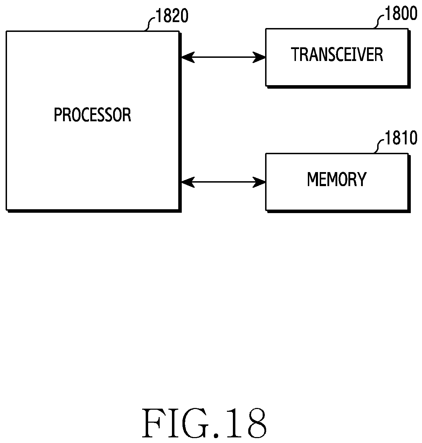

FIG. 18 is a block diagram illustrating a structure of a UE according to an embodiment of the disclosure.

As illustrated in FIG. 18, a UE of the disclosure may include a processor 1820, a transceiver 1800, and a memory 1810. However, components of the UE are not limited to the above-described example. For example, the UE may include a larger or smaller number of components than the above-described components. In addition, the processor 1820, the transceiver 1800, and the memory 1810 may be implemented in the form of a single chip.

According to an embodiment of the disclosure, the processor 1820 may control a series of processes so that the UE can operate according to the above-described embodiments of the disclosure. For example, the processor 1820 may control the components of the UE in order to perform the methods for providing broadcast services according to the above-described embodiments. The processor 1820 may control the components of the UE to perform the embodiments of the disclosure by executing the programs stored in the memory 1810. In addition, the processor 1820 may be an application processor (AP), a communication processor (CP), a circuit, an application -specific circuit, or at least one processor.

According to an embodiment of the disclosure, the transceiver 1800 may transmit/receive signals with network entities, other UEs, or base stations. The signals transmitted/received with network entities, other UEs, or base stations may include control information and data. The transceiver 1800 may include an RF transmitter configured to up-convert and amplify the frequency of transmitted signals, an RF receiver configured to low-noise-amplify received signals and down-convert the frequency thereof, and the like. However, this is only an embodiment of the transceiver 1800, and the components of the transceiver 1800 are not limited to the RF transmitter and the RF receiver. In addition, the transceiver 1800 may receive signals through a radio channel, output the same to the processor 1820, and transmit signals output from the processor 1820 through the radio channel.

According to an embodiment of the disclosure, the memory 1810 may store programs and data necessary for operations of the UE. In addition, the memory 1810 may store control information or data included in signals transmitted/received by the UE. The memory 1810 may include storage media such as a ROM, a RAM, a hard disk, a CD-ROM, and a DVD, or a combination of storage media. In addition, the memory 1810 may include multiple memories. Furthermore, according to an embodiment, the memory 1810 may store programs for executing the above-described methods for providing broadcast services.

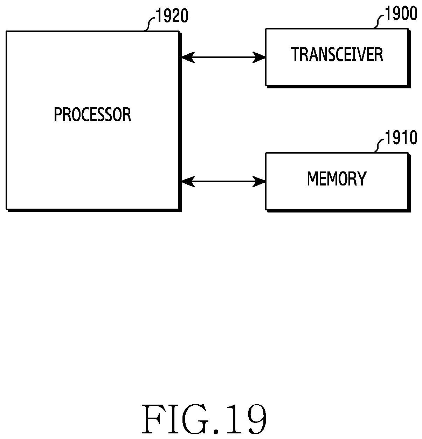

FIG. 19 is a block diagram illustrating a structure of a base station according to an embodiment of the disclosure.

As illustrated in FIG. 19, a base station of the disclosure may include a processor 1920, a transceiver 1900, and a memory 1910. However, components of the base station are not limited to the above-described example. For example, the base station may include a larger or smaller number of components than the above-described components. In addition, the processor 1920, the transceiver 1900, and the memory 1910 may be implemented in the form of a single chip.

According to an embodiment of the disclosure, the processor 1920 may control a series of processes so that the base station can operate according to the above-described embodiments of the disclosure. For example, the processor 1920 may control the components of the base station in order to provide broadcast services according to the above-described embodiments. The processor 1920 may control the components of the base station to perform the embodiments of the disclosure by executing the programs stored in the memory 1910. In addition, the processor 1920 may be an application processor (AP), a communication processor (CP), a circuit, an application -specific circuit, or at least one processor.

According to an embodiment of the disclosure, the transceiver 1900 may transmit/receive signals with network entities, other base stations, or UEs. The signals transmitted/received with network entities, other base stations, or UEs may include control information and data. The transceiver 1900 may include an RF transmitter configured to up-convert and amplify the frequency of transmitted signals, an RF receiver configured to low-noise-amplify received signals and down-convert the frequency thereof, and the like. However, this is only an embodiment of the transceiver 1900, and the components of the transceiver 1900 are not limited to the RF transmitter and the RF receiver. In addition, the transceiver 1900 may receive signals through a radio channel, output the same to the processor 1920, and transmit signals output from the processor 1920 through the radio channel.

According to an embodiment of the disclosure, the memory 1910 may store programs and data necessary for operations of the base station. In addition, the memory 1910 may store control information or data included in signals transmitted/received by the base station. The memory 1910 may include storage media such as a ROM, a RAM, a hard disk, a CD-ROM, and a DVD, or a combination of storage media. In addition, the memory 1910 may include multiple memories. Furthermore, according to an embodiment, the memory 1910 may store programs for executing the above-described methods for providing broadcast services.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although exemplary embodiments of the disclosure have been described and shown in the specification and the drawings by using particular terms, they have been used in a general sense merely to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented. Also, the above respective embodiments may be employed in combination, as necessary.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. A method performed by a terminal of a wireless communication system, the method comprising:

receiving a wakeup-related signal from a base station through a wakeup receiver configured to receive only the wakeup-related signal;

determining a state of a main radio configured to transmit/receive data, based on the wakeup-related signal; and

determining a state of the wakeup receiver, based on the state of the main radio,

wherein the wakeup receiver and the main radio are independently configured.

2. The method of claim 1, wherein, the determining of a state of a main radio configured to transmit/receive data, based on the wakeup-related signal, in case that the wakeup-related signal is a signal indicating main radio ON, controlling the state of the main radio to be ON, or changing the state of the terminal to an RRC connected state.

3. The method of claim 2, wherein, the changing of the state of the terminal to an RRC connected state, controlling to perform a random access immediately after receiving the wakeup-related signal through the main radio, or after a predetermined time.

4. The method of claim 1, wherein, in the determining of a state of a main radio configured to transmit/receive data, based on the wakeup-related signal, in case that the wakeup-related signal is a signal indicating main radio OFF, controlling the state of the main radio to be OFF, or changing the state of the terminal to an RRC inactive state or RRC idle state.

5. The method of claim 1, wherein, in case that the determined state of the main radio is OFF, the state of the terminal is an RRC inactive state or RRC idle state, and

in case that the determined state of the main radio is ON, the state of the terminal is an RRC connected state.

6. The method of claim 1, wherein, in the determining of a state of the wakeup receiver, based on the state of the main radio, in case that the determined state of the main radio is OFF, controlling the state of the wakeup receiver to be ON, and in case that the determined state of the main radio is ON, controlling the state of the wakeup receiver to be OFF.

7. The method of claim 1, further comprising controlling the state of the main radio to be OFF after transmission/reception of the data is completed.

8. The method of claim 1, further comprising receiving configuration information regarding operations of the wakeup receiver from the base station,

wherein the configuration information comprises at least one of information regarding a state change period of the wakeup receiver, information regarding state mapping between the wakeup receiver and the main radio, and information regarding a wakeup-related signal providing period of the base station.

9. A terminal of a wireless communication system, the terminal comprising:

a wakeup receiver;

a main radio; and

at least one processor,

wherein the at least one processor is configured to:

receive a wakeup-related signal from a base station through a wakeup receiver configured to receive only the wakeup-related signal;

determine a state of a main radio configured to transmit/receive data, based on the wakeup-related signal; and

determine a state of the wakeup receiver, based on the state of the main radio, and

wherein the wakeup receiver and the main radio are independently configured.

10. The terminal of claim 9, wherein the at least one processor is configured to, in case that the wakeup-related signal is a signal indicating main radio ON, control the state of the main radio to be ON, or change the state of the terminal to an RRC connected state.

11. The terminal of claim 10, wherein the at least one processor is configured to, in case that the wakeup-related signal is a signal indicating main radio ON, control the state of the main radio to be ON, or change the state of the terminal to an RRC connected state.

12. The terminal of claim 9, wherein the at least one processor is configured to, in case that the wakeup-related signal is a signal indicating main radio OFF, control the state of the main radio to be OFF, or change the state of the terminal to an RRC inactive state or RRC idle state.

13. The terminal of claim 9, wherein, in case that the determined state of the main radio is OFF, the state of the terminal is an RRC inactive state or RRC idle state, and
in case that the determined state of the main radio is ON, the state of the terminal is an RRC connected state.

14. The terminal of claim 9, wherein the at least one processor is configured to, in case that the determined state of the main radio is OFF, control the state of the wakeup receiver to be ON, and in case that the determined state of the main radio is ON, control the state of the wakeup receiver to be OFF.

15. The terminal of claim 9, wherein the at least one processor is configured to receive configuration information regarding operations of the wakeup receiver from the base station, and
the configuration information comprises at least one of information regarding a state change period of the wakeup receiver, information regarding state mapping between the wakeup receiver and the main radio, and information regarding a wakeup-related signal providing period of the base station.

Frame (114)

Subframe (105)

Slot(106)

Resource element
(112)

Transmission bandwidth
$N_{BW}$ subcarriers (104)

$N^{RB}_{sc}$ subcarriers (110)

frequencys    time

$N^{slot}_{symb}$ symbols
(102)

# FIG.1

FIG.2

UE                                    gNB

Random Access Preamble Message 1
(310)
①  ──────────────────────────────▶

Random Access Response Message 2
(320)
◀──────────────────────────────  ②

Scheduled Transmission Message 3
(330)
③  ──────────────────────────────▶

Contention Resolution Message 4
(340)
◀──────────────────────────────  ④

# FIG.3

(401)                                    (402)

UE                                        gNB

UE CAPABILITY INFORMATION
REQUEST (410)

UE CAPABILITY INFORMATION (420)

FIG.4

FIG.5

(601)

Single
state | Always ON |

# FIG.6

(701)　　　　　　　　(702)

Dual
state | Normal (ON) ←→ Sleep (OFF)

(703)

# FIG.7

|       | (801) | | (802) | | | | (803) | | (804) |
|-------|-------|---|-------|---|---|---|-------|---|-------|
| Multi<br>state | State 1<br>$(X_1)$ | $\leftrightarrow$ | State 2<br>$(X_2)$ | $\leftrightarrow$ | $\cdots$ | $\leftrightarrow$ | State N-1<br>$(X_{N-1})$ | $\leftrightarrow$ | State N<br>$(X_N)$ |

# FIG.8

FIG.9

FIG.10

(1101)

Single
state

Always ON

FIG.11

(1201)            (1202)

Dual state | Normal (ON) ←→ Sleep (OFF)

(1203)

FIG.12

(1301)   (1302)   (1303)   (1304)

Multi state | State 1 ($X_1$) | ↔ | State 2 ($X_2$) | ↔ ... ↔ | State K-1 ($X_{K-1}$) | ↔ | State K ($X_K$) |

# FIG.13

Wakeup Receiver
(WUR)

Main Radio

| Sleep (OFF)<br>(1401) | | Sleep (OFF)<br>(1403) |

(1405)

(1406)

| Normal (ON)<br>(1402) | | Normal (ON)<br>(1404) |

# FIG.14

FIG.15

START

↓

RECEIVE WUS CORRESPONDING TO MAIN RADIO
ON FROM GNB THROUGH WUR    ⌇1601

↓

TRIGGER FOR MAIN RADIO STATE CHANGE    ⌇1602

↓

CHANGE MAIN RADIO STATE
BY PERFORMING RANDOM ACCESS    ⌇1603

↓

CHANGE WUR STATE    ⌇1604

↓

TRANSMIT/RECEIVE SCHEDULING AND
INFORMATION FROM GNB    ⌇1605

↓

END

# FIG.16

```
                    ┌──────────────┐
                    │    START     │
                    └──────────────┘
                           │
                           ▼              ⌇1701
         ┌ ─ ─ ─ ─ ─ ─ ─ ─ ─ ─ ─ ─ ─ ─ ─ ─ ┐
         │ RECEIVE WUS CORRESPONDING TO MAIN RADIO │
         │      OFF FROM GNB THROUGH WUR          │
         └ ─ ─ ─ ─ ─ ─ ─ ─ ─ ─ ─ ─ ─ ─ ─ ─ ┘
                           │
                           ▼              ⌇1702
         ┌─────────────────────────────────────┐
         │   TRIGGER FOR MAIN RADIO STATE CHANGE │
         └─────────────────────────────────────┘
                           │
                           ▼              ⌇1703
         ┌─────────────────────────────────────┐
         │        CHANGE MAIN RADIO STATE        │
         └─────────────────────────────────────┘
                           │
                           ▼              ⌇1704
         ┌ ─ ─ ─ ─ ─ ─ ─ ─ ─ ─ ─ ─ ─ ─ ─ ─ ┐
         │         CHANGE WUR STATE              │
         └ ─ ─ ─ ─ ─ ─ ─ ─ ─ ─ ─ ─ ─ ─ ─ ─ ┘
                           │
                           ▼
                    ┌──────────────┐
                    │     END      │
                    └──────────────┘
```

# FIG.17

1820

PROCESSOR

1800

TRANSCEIVER

1810

MEMORY

FIG.18

1920

1900

PROCESSOR

TRANSCEIVER

1910

MEMORY

# FIG.19

<div align="center">

**INTERNATIONAL SEARCH REPORT**

</div>

| International application No. |
| --- |
| **PCT/KR2023/008756** |

**A. CLASSIFICATION OF SUBJECT MATTER**

**H04W 52/02**(2009.01)i; **H04W 76/27**(2018.01)i

According to International Patent Classification (IPC) or to both national classification and IPC

**B. FIELDS SEARCHED**

Minimum documentation searched (classification system followed by classification symbols)

H04W 52/02(2009.01); H04W 4/80(2018.01); H04W 68/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 웨이크업(wake-up), 리시버(receiver), 메인 라디오(main radio), 상태(state), RRC

**C. DOCUMENTS CONSIDERED TO BE RELEVANT**

| Category* | Citation of document, with indication, where appropriate, of the relevant passages | Relevant to claim No. |
| --- | --- | --- |
| X | VIVO. Study on Low-power WUS. RP-213265, 3GPP TSG RAN Meeting #94-e. 29 November 2021. See pages 1-4 and figure 1. | 1-2,4,6-7,9-12,14 |
| Y |  | 8,15 |
| A |  | 3,5,13 |
| Y | MODERATOR (MEDIATEK). Summary#6 of Paging Enhancements. R1-2108660, 3GPP TSG RAN WG1 #106-e. 06 September 2021. See pages 1-106. | 8,15 |
| A | ZTE et al. Discussion on Rel-18 low-power WUS. RP-213389, 3GPP TSG RAN Meeting #94-e. 29 November 2021. See pages 1-4. | 1-15 |
| A | KR 10-2021-0134785 A (TELEFONAKTIEBOLAGET LM ERICSSON(PUBL)) 10 November 2021 (2021-11-10) See paragraphs [0032]-[0175] and figure 1. | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2023** | **26 September 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/008756** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2018-175760 A1 (INTEL CORPORATION) 27 September 2018 (2018-09-27)<br>See paragraphs [0025]-[0238] and figure 7. | 1-15 |

Form PCT/ISA/210 (second sheet) (July 2022)

**INTERNATIONAL SEARCH REPORT**
Information on patent family members

International application No.

**PCT/KR2023/008756**

| Patent document cited in search report | | | Publication date (day/month/year) | Patent family member(s) | | | Publication date (day/month/year) |
|---|---|---|---|---|---|---|---|
| KR | 10-2021-0134785 | A | 10 November 2021 | CA | 3134727 | A1 | 01 October 2020 |
| | | | | EP | 3949531 | A1 | 09 February 2022 |
| | | | | US | 2022-0201610 | A1 | 23 June 2022 |
| | | | | WO | 2020-192949 | A1 | 01 October 2020 |
| | | | | ZA | 202106423 | B | 28 April 2022 |
| WO | 2018-175760 | A1 | 27 September 2018 | CN | 110463285 | A | 15 November 2019 |
| | | | | CN | 110463285 | B | 14 July 2023 |
| | | | | EP | 3603223 | A1 | 05 February 2020 |
| | | | | EP | 3603223 | A4 | 13 January 2021 |
| | | | | US | 11284372 | B2 | 22 March 2022 |
| | | | | US | 2020-0029302 | A1 | 23 January 2020 |
| | | | | US | 2022-0201649 | A1 | 23 June 2022 |

Form PCT/ISA/210 (patent family annex) (July 2022)